# EUROPÄISCHE PATENTSCHRIFT

(11) **EP 1 673 272 B1**
(45) Veröffentlichungstag und Bekanntmachung des Hinweises auf die Patenterteilung: **30.06.2010**
(21) Anmeldenummer: 04790216.8
(22) Anmeldetag: 08.10.2004
(51) Int. Cl.: B62D 29/00, B62D 21/17, B62D 25/14

(54) **VERFAHREN UND VORRICHTUNG ZUR HERSTELLUNG EINES BAUTEILS, INSBESONDERE EINES HYBRIDBAUDTEILS FÜR EINEN QUERTR GER EINES FAHRZEUGS SOWIE BAUTEIL UND VERWENDUNG EINES BAUTEILS**
METHOD AND DEVICE FOR THE PRODUCTION OF A COMPONENT, ESPECIALLY A HYBRID COMPONENT FOR A CROSSRAIL OF A VEHICLE, COMPONENT AND USE OF SAID COMPONENT
PROCEDE ET DISPOSITIF POUR FABRIQUER UN COMPOSANT, EN PARTICULIER UN COMPOSANT HYBRIDE DE POUTRE TRANSVERSALE DE VEHICULE, UN TEL COMPOSANT ET UTILISATION DE CELUI-CI

(30) Priorität: 08.10.2003 DE 10347230; 24.02.2004 DE 102004009413
(43) Veröffentlichungstag der Anmeldung: 28.06.2006
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2004/011279
(87) Internationale Veröffentlichungsnummer: WO 2005/035338

(56) Entgegenhaltungen:
- DE-A1- 10 064 522
- DE-A1- 10 215 347
- DE-A1- 10 316 080

## Beschreibung

Die Erfindung bezieht sich auf ein Verfahren und eine Vorrichtung zur Herstellung eines einen zumindest teilweise kunststoffausgekleideten Grundkörper umfassenden Bauteils, insbesondere eines Hybridbauteils für einen Querträger eines Fahrzeugs. Des Weiteren betrifft die Erfindung ein Bauteil, insbesondere ein Hybridbauteil sowie die Verwendung eines derartigen Bauteils.

Aus dem Kraftfahrzeugbau sind aus Rohren gebildete Querträger bekannt, die aus Metall bestehen und entsprechend große Wandstärken aufweisen. Die Wandstärken sind dabei für eine ausreichende Form-, Biege-, Knick- und Torsionssteifigkeit sowie für eine ausreichende Druckbelastbarkeit entsprechend dick ausgeführt. Der als Rohr- oder Hohlprofil ausgebildete Querträger eignet sich prinzipiell zur Luftführung, beispielsweise von einer mittig im Frontbereich des Fahrzeugs angeordneten Klimaanlage zu seitlichen Ausströmern hin.

Ein derartiger Querträger ist beispielsweise aus der DE 100 64 522 A1 bekannt. Dabei ist der Querträger zur Gewichtsreduzierung aus einem Leichtbauwerkstoff, insbesondere aus einem Leichtmetall in Art eines Schalenbauteils oder Grundkörpers, gebildet, in welchen für eine hinreichende Steifigkeit und Druckbelastbarkeit des Querträgers ein zumindest einen Kanal bildender Kunststoffkern angeordnet ist. Zum Austritt des Luftstroms ist der Kanal mit Öffnungen versehen.

Üblicherweise wird ein derartiges aus einem metallischen Grundkörper und einem Kunststoffkern gebildetes Bauteil in mehreren Umformstufen hergestellt. Dabei wird in einem ersten Schritt der metallische Grundkörper in einem Umformwerkzeug in eine Ursprungsform gebracht, anschließend wird in einem Spritzgusswerkzeug der Kunststoffkem eingebracht. Dies führt neben vielen Umformstufen zu einer aufwendigen Werkzeugtechnik. Im Allgemeinen sind dabei Elemente, wie z. B. Blechschalen, des Grundkörpers mit einer Verbindung an einem durch beide Blechschalen gebildeten Blechkragen versehen. Bei einer Kunststoffinnenverkleidung, z. B. dem Kunststoffkern, durch Ausspritzen des Grundkörpers kann es im Bereich der Verbindung zu einer mechanischen und/oder thermischen Belastung der Kunststoffauskleidung oder -innenverkleidung beim Verbinden der Blechschalen kommen. Alternativ wird die angespritzte Kunststoffauskleidung selbst als Verbindungselement der beiden Blechschalen genutzt, indem sich der Kunststoff an entsprechenden Öffnungen des Grundkörpers auskragt.

Ferner ist aus der DE 102 15 347 ein Verfahren zur Herstellung eines zumindest teilweise kunststoffausgekleideten Grundkörpers umfassenden Bauteils bekannt. Der Grundkörper wird durch Trägerelementkörper gebildet, wobei innenseitig ein Kanal angeordnet ist. Trägerelementkörper werden durch Verbinden ihrer Verbindungsflächen, die einander zugewandt sind zusammengefasst um hierdurch eine rohrförmige geschlossene Querschnittsgestalt zu bilden.

Der Erfindung liegt die Aufgabe zugrunde, ein besonders einfaches und kostengünstiges Verfahren sowie eine besonders geeignete Vorrichtung zur Herstellung eines als Hybridbauteil ausgebildeten Bauteils anzugeben, wobei insbesondere die Verwendung des Bauteils als Strömungskanal durch entsprechend verbesserten Aufbau des Bauteils ermöglicht ist. Des Weiteren ist ein Bauteil mit einem verbesserten Aufbau anzugeben.

Die Aufgabe wird bezüglich des Verfahrens erfindungsgemäß gelöst durch die Merkmale des Anspruchs 1 und bezüglich des Bauteils durch die Merkmale des Anspruchs 18 sowie bezüglich der Verwendungen eines derartig hergestellten Bauteils durch die Merkmale der Ansprüche 31 bis 35.

Vorteilhafte Weiterbildungen der Erfindung sind Gegenstand der Unteransprüche.

Die Erfindung geht dabei von der Überlegung aus, dass bei der Herstellung eines Bauteils, wie eines Hybridbauteils für einen Querträger eines Fahrzeugs, mittels mehrerer Werkzeuge und einer Vielzahl von Verfahrensschritten an einen metallischen Grundkörper oder an ein Blechteil innenseitig und/oder außenseitig Kunststoffelemente eingefügt, angeformt oder angespritzt oder der metallische Grundkörper zumindest innenwandig wenigstens partiell mit Kunststoff umspritzt wird. Für eine möglichst einfache Handhabung des Bauteils beim Herstellungsprozess ist der Grundkörper vorzugsweise aus mehreren Elementen, insbesondere aus zwei Elementen, z. B. aus zwei Halbschalen oder einer Halbschale und einem Deckel, gebildet, die in einem Formgebungselement vorgeformt werden können. Zur Nutzung des Bauteils als Luftführungskanal oder zur Ausbildung des Bauteils als ein Hohlkörper werden die einzelnen Elemente des Grundkörpers mechanisch, insbesondere durch Verstemmen, Druckfügen, Clinchen oder über den angeformten, insbesondere angespritzten oder eingefügten Kunststoffkern, unter Bildung eines Kanals miteinander verbunden. Für eine hinreichend gute Verbindung der Elemente des Grundkörpers hinsichtlich eines möglichst guten Schutzes gegenüber mechanischen Belastungen und einer möglichst guten Abdichtung des Grundkörpers bei einer Verwendung als Strömungskanal werden die Elemente des Grundkörpers im Bereich der Verbindungsstelle der beiden Elemente derart aneinander gefügt und verbunden, dass ein Hohlraum zwischen der Verbindungsstelle und der Kunststoffauskleidung gebildet ist. Insbesondere weist die in Art einer Kunststoffauskleidung eingefügte oder eingespritzte Kunststoffstruktur einen gegenüber dem Querschnitt des Grundkörpers kleineren Querschnitt auf, indem die Kunststoffstruktur, insbesondere im Bereich mindestens einer der Verbindungsstellen, mit einer Ein- oder Auswölbung versehen ist.

Zweckmäßigerweise wird die Größe des Hohlraums in Abhängigkeit von der Art der Verbindungsstelle und/oder der Kunststoffdicke vorgegeben. Je nach Verwendung des Bauteils weist der Hohlraum einen Mindestabstand zwischen der Verbindungsstelle und dem Kunststoff von mindestens 0,8 mm, insbesondere von 0,8 mm bis 5 mm, von 5 mm bis 10 mm, von 10 mm bis 15 mm, von 15 mm bis 20 mm oder von 20 mm bis 25 mm, auf. Insbesondere ist der Mindestabstand derart groß vorgegeben, dass eine hinreichend große Wärmeleitstrecke zwischen der Verbindungsstelle und dem Kunststoff oder der Kunststoffstruktur bewirkt ist. Beispielsweise wird bei einer thermischen Verbindung, z. B. beim Schweißen, der Elemente des Grundkörpers ein hinreichend großer Mindestabstand vorgegeben, wohingegen bei einer lediglich mechanischen Verbindung der Elemente, z. B. durch Kleben, ein kleinerer Mindestabstand vorgegeben wird und der Hohlraum entsprechend kleiner ausgebildet wird. Beispielsweise werden die Elemente mechanisch und/oder stoffschlüssig, insbesondere durch Schweißen, Kleben, Löten, Clinchen, Bördeln, Verstemmen und/oder über die angeformten, insbesondere angespritzte Kunststoffschicht miteinander verbunden. Mit anderen Worten: Je nach gewählter Verbindungsart oder -form wird entsprechend die Größe des Hohlraums und/oder der Mindestabstand zwischen der Verbindungsstelle und der Kunststoffauskleidung vorgegeben.

Für eine möglichst gute Tragstruktur und Tragkonstruktion des Bauteils wird der Grundkörper zweckmäßigerweise zumindest partiell vom Kunststoff beschichtet, insbesondere umspritzt. Alternativ oder zusätzlich kann der Kunststoff separat vorgeformt und anschließend in den Grundkörper eingefügt werden. Vorzugsweise wird der Grundkörper innen- und/oder außenseitig mit Kunststoff versehen. Auch wird der Kunststoff bevorzugt ein- oder mehrschichtig und/oder mit bereichsweise variierender Dicke aufgebracht. Für eine möglichst gute Biege-, Beul- sowie Torsionssteifigkeit des Bauteils wird der Kunststoff vorzugsweise formschlüssig und flächig aufgebracht. Die Kunststoffschicht bewirkt neben einer guten Struktursteifigkeit auch eine thermische Isolierung und/oder Schallisolierung bei einer als Kanal ausgeführten Kunststoffstruktur, welche von einem gasförmigen oder flüssigen Medium durchströmt wird. Zusätzlich kann eine der Kunststoffschichten mit einer Verstärkung, insbesondere mit einem Verstärkungsgewebe, z. B. einem Glasfasergewebe, versehen werden.

Vorteilhafterweise kann der teilweise mit Kunststoff ausgekleidete Grundkörper zumindest bereichsweise perforiert ausgebildet sein. Zweckmäßigerweise erfolgt dies beispielsweise in einem Öffnungsbereich. Ein derartiger Grundkörper hat insbesondere den Vorteil Gewicht zu sparen und/oder die Struktur zu verstärken.

Alternativ oder zusätzlich wird der Grundkörper mit einer Kunststoffstruktur, insbesondere mit einer Kunststoffversteifungsstruktur, z. B. einer Innenverrippung, oder mit einer Kunststoffführungsstruktur, z. B. einem Strömungskanal oder einem Leit- oder Führungselement, versehen. Je nach Art und Funktion des Bauteils wird der Kunststoff mit unterschiedlicher Dicke zwischen 0,8 mm und 10 mm, insbesondere mit einer Dicke von 0,8 mm bis 3mm, von 3 mm bis 6 mm oder von 6 mm bis 10 mm, vorzugsweise 1,2 mm bis 3 mm, aufgebracht. Bevorzugt wird der Kunststoff in einem an sich bekannten Ein- oder Mehrkomponenten-Spritzgussverfahren eingebracht.

Vorzugsweise wird ein aus einem Metall, Leichtmetall oder deren Legierungen, insbesondere Aluminium, Magnesium oder Feinstahl, gebildeter Grundkörper mit einer Wanddicke von 0,4 mm bis 2,0 mm, bevorzugt auch von 0,4 mm bis 1,5 mm oder 1,5 mm bis 2,0 mm oder, insbesondere abhängig von der Festigkeit des Materials, auch bis 3,0 mm verwendet. Ein derartiger metallischer Grundkörper oder ein Blechteil ist besonders kostengünstig und für einen auf Gewichtsreduzierung ausgelegten Leichtbau im Fahrzeugbau besonders geeignet. Je nach Art und Funktion des Bauteils kann der Grundkörper mit bereichsweise variierender Wanddicke geformt werden. Beispielsweise kann bei einer Verwendung des Bauteils als Querträger dieser im Bereich von Halterungen und Krafteinleitungsstellen im Fahrzeug, z. B. Anbindung an eine A-Säule, im Lenkungsbereich, Anbindung einer Klimaanlage oder bei Front-Ends in den Bereichen der Längsträger, der Motorlager oder des Haubenschlosses, mit einer dickeren Wandstärke ausgebildet sein als im Bereich, in dem das Bauteil lediglich als Luftführungskanal, als Montageträger oder für andere Funktionen dient. Solche Bleche sind als "Tailored Blanks" (bereichsweise zusammengeschweißt), "Tailored rolled Blanks" (gewalzt mit unterschiedlicher Dicke in Walzrichtung), "Profiliertes Band" (z. B. Rand dick, Mitte dünn) oder als "Patch-Work-Bleche" (wie bei einem Puzzle, jedoch jedes Teil mit unterschiedlicher Wandstärke zur Platine gefügt) verfügbar.

Zur Reduzierung insbesondere der Anzahl der Werkzeuge, aber auch zur Reduzierung der Anzahl der Verfahrensschritte bei der Herstellung des Bauteils, insbesondere des Hybridbauteils, wird vorteilhafterweise das Bauteil lediglich mittels eines einzigen Werkzeugs, insbesondere eines Formgebungs- und/oder Fügewerkzeugs, hergestellt. Dabei wird der Grundkörper in das Formgebungs- und/oder Fügewerkzeug, insbesondere dessen Formgebungselement, eingelegt und zumindest teilweise oder vollständig durch Schließen des Formgebungs- und/oder Fügewerkzeugs vorgeformt bzw. gefügt, wobei anschließend beim Kunststoffeinbringen in den Grundkörper im Bereich einer Verbindungsstelle der zwei Elemente des Grundkörpers ein Hohlraum zwischen der Verbindungsstelle und dem Kunststoff formbar ist. Dabei wird in einfacher Art und Weise beim Einlegen des Grundkörpers diejenige Stelle oder Position des Formgebungs- und/oder Fügewerkzeugs entsprechend zur Formung des Grundkörpers genutzt, welche bei einer kunststoffbeschichteten Ausführung des Grundkörpers als Hohlraum zum Einbringen des Kunststoffs bzw. bei einer kunststoffangefügten Ausführung des Grundkörpers als Hohlraum zum Einfügen des vorgeformten Kunststoffs vorgesehen ist. Ist der Hohlraum auf beiden Seiten des Grundkörpers, Ober- und Unterseite vorhanden, so formt sich der Grundkörper beim Kunststoffeinbringen mittels Einspritz- oder Fülldruck bzw. beim Kunststoffeinfügen des vorgeformten Kunststoffs an dieser Stelle um und passt sich der Kontur des Formgebungs- und/oder Fügewerkzeugs an. Somit kann gezielt und durch entsprechende Abmessungen des Formgebungs- und/oder Fügewerkzeugs der Grundkörper selbst im Formgebungs- und/oder Fügewerkzeug vorgeformt, partiell geformt und druckgeformt werden.

Dabei weist das Formgebungs- und/oder Fügewerkzeug vorteilhafterweise eine die Kontur des Grundkörpers entsprechende Form gebende Seite, insbesondere eine Innenwand, auf. Insbesondere ist das Formgebungsund/oder Fügewerkzeug für ein ein- oder beidseitiges Beschichten oder Auskleiden des Grundkörpers mit Kunststoff ausgebildet. Für ein Beschichten weist das Formgebungs- und/oder Fügewerkzeug entsprechende Abmessungen auf, so dass ein- oder beidseitig des Grundkörpers nach dessen Vorformen mindestens ein den Grundkörper vollständig oder partiell umlaufender Spalt gebildet ist, der zur Aufnahme des Kunststoffs vorgesehen ist.

Zweckmäßigerweise wird der Grundkörper in dem Formgebungs- und/oder Fügewerkzeug durch Einführen mindestens eines Form gebenden Werkzeugelements, z. B. mittels eines Stempels, vorgeformt. Dies ermöglicht eine weitgehend genaue und hinreichend gute Vorformung oder Vorfertigung des Grundkörpers bereits im Formgebungs- und/oder Fügewerkzeug. Darüber hinaus ist hierdurch eine Vorfertigung mit wenigen Umformstufen erreicht. Vorzugsweise wird der Grundkörper in einer Nachdruckphase durch Eindrücken und/oder Durchdrücken des Formgebungs- und/oder Fügewerkzeugs in eine vorgegebene Endausbildung druckgeformt.

Für eine möglichst flexible Vorformung des Grundkörpers ist das Formgebungs- und/oder Fügewerkzeug ein- oder mehrteilig ausgebildet. Insbesondere umfasst das Formgebungs- und/oder Fügewerkzeug ein Ober- und/oder ein Unterwerkzeug, das wiederum bevorzugt ein- oder mehrteilig ausgebildet sein kann. Für eine Ausbildung des Grundkörpers mit einer Oberflächenstruktur in Form von verschiedenen Mustern, wie z. B. Rillen oder Kreuzmustern, ist das Formgebungs- und/oder Fügewerkzeug, insbesondere das Ober- und/oder Unterwerkzeug, mit mindestens einer Sicke versehen. Des Weiteren ist das Formgebungs- und/oder Fügewerkzeug für eine innenliegende Auskleidung des Hohlraums des Grundkörpers mit einer Kunststoffstruktur, z. B. einer Kunststoffversteifungsstruktur und/oder einer Kunststoffführungsstruktur, mit mindestens einem weiteren Formgebungselement versehen.

Hinsichtlich des Bauteils, insbesondere eines Hybridbauteils für einen Querträger eines Fahrzeugs, weist das Bauteil, wie oben beispielhaft anhand des Herstellungsverfahrens näher erläutert, einen zumindest teilweise kunststoffausgekleideten Grundkörper auf, der aus mindestens zwei Elementen gebildet ist, welche an mindestens einer Verbindungsstelle miteinander verbindbar sind, wobei der Grundkörper derart mit Kunststoff innenwandig versehen ist, dass im Bereich einer der Verbindungsstelle zwischen der betreffenden Verbindungsstelle und dem Kunststoff ein Hohlraum gebildet ist. Insbesondere ist der Kunststoff in Art einer Kunststoffstruktur im Grundkörper angeordnet, z.B. angespritzt, angefügt und/oder eingefügt. Dabei weist die Kunststoffstruktur einen gegenüber dem Querschnitt des Grundkörpers kleineren Querschnitt auf, indem im Bereich der Verbindungsstellen mit hoher thermischer und/oder mechanischer Belastung beim Verbinden ein Hohlraum mit einem Mindestabstand zwischen dem metallischen Grundkörper und der innenliegenden Kunststoffstruktur gebildet ist. Je nach Vorgabe beträgt der Mindestabstand von 0,8 mm bis 25 mm, insbesondere von 0,8 mm bis 5 mm, von 5 mm bis 10 mm, von 10 mm bis 15 mm, von 15 mm bis 20 mm oder von 20 bis 25 mm. Der Mindestabstand hängt unter anderem von der Querschnittsgröße des Grundkörpers und/oder der Kunststoffstruktur im Bereich der Verbindungsstelle, von der Art der Verbindungsstelle und/oder der Dicke der Kunststoffstruktur ab.

Der Grundkörper ist aus einem Metall und/oder einem Leichtmetall, z. B. aus Aluminium, Magnesium, oder Feinstahl, und weist eine Wanddicke von 0,4 mm bis 1,5 mm, bis 2 mm oder bis 3,0 mm auf. Die Wanddicke des metallischen Grundkörpers kann variieren, insbesondere im Bereich mit an dem Grundkörper angeordneten Halteelementen, z. B. einem Halteelement für eine Klimaanlage, weist der Grundkörper eine hinreichend große Wanddicke auf.

Das Bauteil kann auch in einem anderen Herstellungsverfahren als dem oben näher erläuterte Herstellungsverfahren hergestellt werden. Das hier beschriebene Herstellungsverfahren für ein Bauteil mit bereichsweise Metall-Kunststoff-Verbindungen ist ein besonders einfaches und kostengünstiges Verfahren und ermöglicht ein nachträgliches Fügen oder Einspritzen des Kunststoffs als Kunststoffstruktur.

Bevorzugt wird ein nach dem oben beschriebenen Verfahren hergestelltes Bauteil als Instrumententafelträger in einem Fahrzeug verwendet, wobei der Kunststoffkem einen oder mehrere Kanäle, insbesondere einen Luftführungskanal und/oder einen Kabelkanal, bildet. Alternativ kann ein derart hergestelltes Bauteil als Querträger in einem Fahrzeug, insbesondere als Querträger zwischen den A-Säulen eines Fahrzeugs, verwendet werden. Alternativ kann ein derart ausgebildetes Bauteil als unter einer Windschutzscheibe angeordneter Querträger in einem Kraftfahrzeug verwendet werden, wobei der Kanal ein Luftführungskanal zur Führung eines der Windschutzscheibe und/oder den Seitenscheiben zu zuführenden Luftstroms und/oder zur Beheizung einer Wischblattablage. Auch könnte das Bauteil als ein so genanntes Rear-End oder Heckabschlussmodul verwendet werden.

Die mit der Erfindung erzielten Vorteile bestehen insbesondere darin, dass durch ein derart in einem einzigen Werkzeug einfach komplett geformtes und mit Kunststoff ausgekleidetes Bauteil ein besonders einfaches und kostengünstiges Herstellungsverfahren gegeben ist, welches durch Wahl der Verbindungsstellen und einem davon abhängigen Hohlraum zwischen der Verbindungsstelle und der Kunststoffauskleidung eine weitgehend gute Nutzung des Bauteils als Strömungskanal oder Führungskanal ermöglicht. Zudem ist das Bauteil mit einem besonders einfachen Werkzeug herstellbar. Auch ist die Anzahl der Verfahrensschritte und somit die Herstellungszeit eines Hybridbauteils deutlich reduziert.

Ausführungsbeispiele der Erfindung werden anhand einer Zeichnung näher erläutert. Darin zeigen:
- Figuren 1 bis 5: schematisch verschiedene Ausführungsformen für ein fertig gestelltes Bauteil mit einem zumindest teilweise kunststoffausgekleideten Grundkörper und verschiede- nen Verbindungsstellen für Elemente des Grundkör- pers,
- Figuren 6A bis 7B: schematisch verschiedene Ausführungsformen für die Kunststoffauskleidung eines Grundkörpers,
- Figuren 8A bis 8C: schematisch die Verfahrensschritte zur Herstellung ei- nes einen zumindest teilweise kunststoffausgekleideten Grundkörper umfassenden Bauteils in einer ein Form- gebungs- und Formfügungswerkzeug umfassenden Vorrichtung,
- Figuren 9A bis 10B: schematisch verschiedene Ausführungsformen für ei- nen Grundkörper mit einer eingefügten Kunststoffaus- kleidung,
- Figuren 11A bis 11B: schematisch eine Ausführungsform für einen Grund- körper mit einer Kunststoffbeschichtung, und
- Figuren 12A bis 128: schematisch eine Ausführungsform für einen Grund- körper mit einer teilweisen Kunststoffbeschichtung und einer teilweise eingefügten Kunststoffauskleidung.

Einander entsprechende Teile sind in allen Figuren mit den gleichen Bezugszeichen versehen.

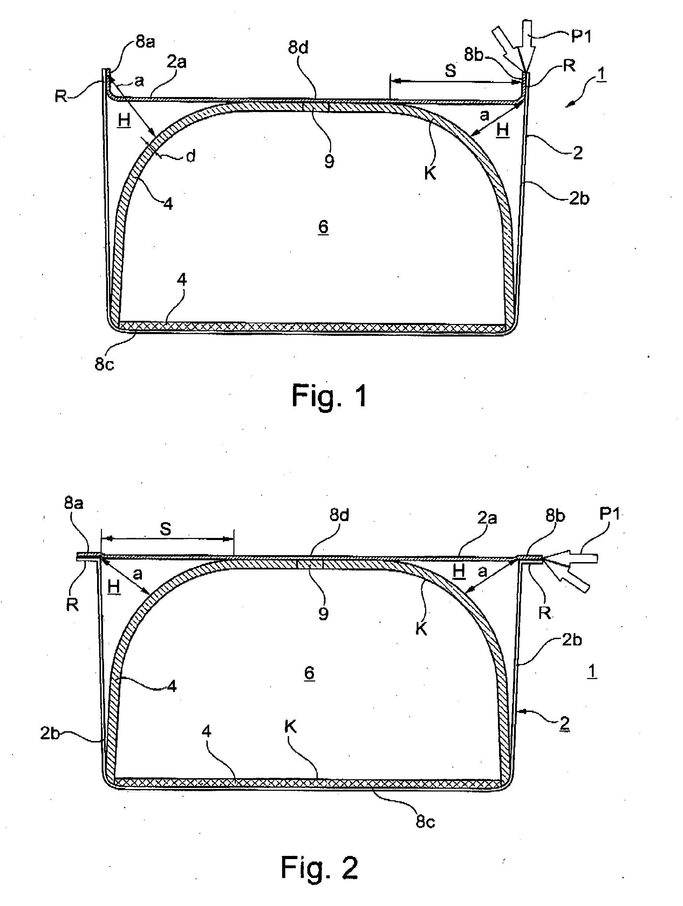

Figur 1 zeigt im Querschnitt ein Bauteil 1, z. B. einen Querträger, zum Anordnen zwischen nicht näher dargestellten A-Säulen eines nicht näher dargestellten Fahrzeugs.

Das Bauteil 1 weist hierzu einen Grundkörper 2 auf, der bevorzugt aus Blech, insbesondere aus einem Leichtmetall-Blech, z. B. aus AluminiumBlech, Magnesium-Blech oder Feinstahl-Blech, gebildet ist. Der Grundkörper 2 ist im Ausführungsbeispiel als Hohlprofil, insbesondere kastenartig, ausgeführt. Alternativ kann der Grundkörper 2 auch als ein Hohlprofil mit einem runden Querschnitt ausgeführt sein. In einer möglichen Ausführungsform ist der Grundkörper 2 aus zwei Elementen 2a und 2b, z. B. einem U-Profil oder Unterschale und einem Deckel, gebildet.

Der Grundkörper 2 ist innenseitig mit Kunststoff 4 versehen, der eine Kunststoffstruktur K, beispielsweise einen Kanal 6, bildet. Der Kunststoff 4 kann dabei in Art einer Kunststoffauskleidung angefügt, eingefügt oder angespritzt sein.

Für eine möglichst gute Nutzung des mittels der Kunststoffstruktur K gebildeten Kanals 6 zur Führung eines Mediums, z. B. von Luft zur Klimatisierung eines Fahrzeuginnenraums oder alternativ von Leitungen oder Kabeln, sind die beiden Elemente 2a und 2b hinreichend fest miteinander zu verbinden. Dazu weist das Bauteil 1 mindestens eine Verbindungsstelle 8a bis 8d auf. Beispielsweise ist der Grundkörper 2 an den Verbindungsstellen 8a und 8b mechanisch und/oder stoffschlüssig verbunden. Dabei kann der Grundkörper 2 durch Verstemmen an den aneinander liegenden Rändern R der Elemente 2a, 2b genietet, geschraubt, geschweißt, geklebt, gebördelt, verstemmt, geclincht oder in ähnlicher Weise verbunden sein. Hierdurch kann es zu einer mechanischen und/oder thermischen Belastung der Verbindungsstelle 8a, 8b und des im Bereich der Verbindungsstelle 8a, 8b angeordneten Kunststoffs 4 kommen.

Daher werden die beiden Elemente 2a und 2b des Grundkörpers 2 derart mit dem Kunststoff 4 innenwandig ausgekleidet, dass im Bereich mindestens einer der Verbindungsstellen 8a oder 8b zwischen der betreffenden Verbindungsstelle 8a bzw. 8b und dem Kunststoff 4 ein Hohlraum H gebildet ist. Hierzu weist die Kunststoffstruktur K einen gegenüber dem Querschnitt des Grundkörpers 2 kleineren Querschnitt auf. Insbesondere weist die Kunststoffstruktur K im Bereich der betreffenden Verbindungsstelle 8a, 8b eine Bogenform auf, d. h. die Kunststoffstruktur K weist nur eine bereichsweise identische Form mit dem Grundkörper 2 auf, z. B. im Bereich der Verbindungsstellen 8c und 8d. Mit anderen Worten: Im Bereich der Verbindungsstellen 8a und 8b kann die Kunststoffstruktur K zur Bildung des Hohlraums H mit einer Auswölbung oder Einwölbung versehen sein. Durch Bildung des Hohlraums H und des Mindestabstands a ist sichergestellt, dass es bei einem Verbinden der Elemente 2a und 2b des Grundkörpers 2 an den Verbindungsstellen 8a, 8b aufgrund der Verbindungsart zu keiner Beschädigung des Kunststoffstruktur K kommt.

Die Größe des Hohlraums H wird beispielsweise in Abhängigkeit von der Art der Verbindungsstelle 8a, 8b und/oder der Dicke d des Kunststoffs 4 vorgegeben. Beispielsweise ist der Hohlraum H bei einer Schweißverbindung gröβer als bei einer Clinch-Verbindung ausgebildet. Der Pfeil P1 zeigt die Schweißorientierung für eine Schweißverbindung an.

Des Weiteren ist die Größe des Hohlraums H derart groß gebildet, dass ein Mindestabstand a zwischen der jeweiligen Verbindungsstelle 8a oder 8b und dem Kunststoff 4 von mindestens 0,8 mm und höchstens 25 mm, insbesondere von 0,8 mm bis 5 mm, von 5 mm bis 10 mm, von 10 mm bis 15 mm, 15 mm bis 20 mm, von 20 mm bis 25 mm, gegeben ist.

Zusätzlich kann der Grundkörper 2, insbesondere dessen zwei Elemente 2a und 2b, an den Verbindungsstellen 8c und 8d über den Kunststoff 4 zusammengehalten werden. Beispielsweise ist Kunststoff 4 an der Verbindungsstelle 8d über eine Öffnung 9 an den Grundkörper 2 gefügt und an der Verbindungsstelle 8c über eine beispielsweise durch ein Thermoverfahren bewirkte Eigenhaftung mit dem Grundkörper 2 verbunden.

Die aus dem Kunststoff 4 gebildete Kunststoffstruktur K dient in Art einer Kunststoffauskleidung unter anderem der Erhöhung der Steifigkeit des Grundkörpers 2. Der besonders dünnwandig ausgebildete Grundkörper 2 führt beim Durchströmen mit Luft zu einer Geräuschentwicklung, welche besonders vorteilhaft durch Auskleidung des Grundkörpers 2 mit dem Kunststoff 4 gedämpft wird. D. h. der Kunststoff 4 übernimmt eine Schallisolierung und ggf. auch eine thermische Isolierung.

Figur 2 zeigt im Querschnitt eine alternative Ausführungsform für ein Bauteil 1 mit einem Grundkörper 2 aus den Elementen 2a und 2b, die über die Ränder R an den Verbindungsstellen 8a und 8b sowie über den Kunststoff 4 an den Verbindungsstellen 8c und 8d miteinander verbunden sind. Pfeil P1 zeigt hier die für eine Schweißverbindung der Verbindungsstelle 8b gegenüber Figur 1 geänderte Schweißorientierung an.

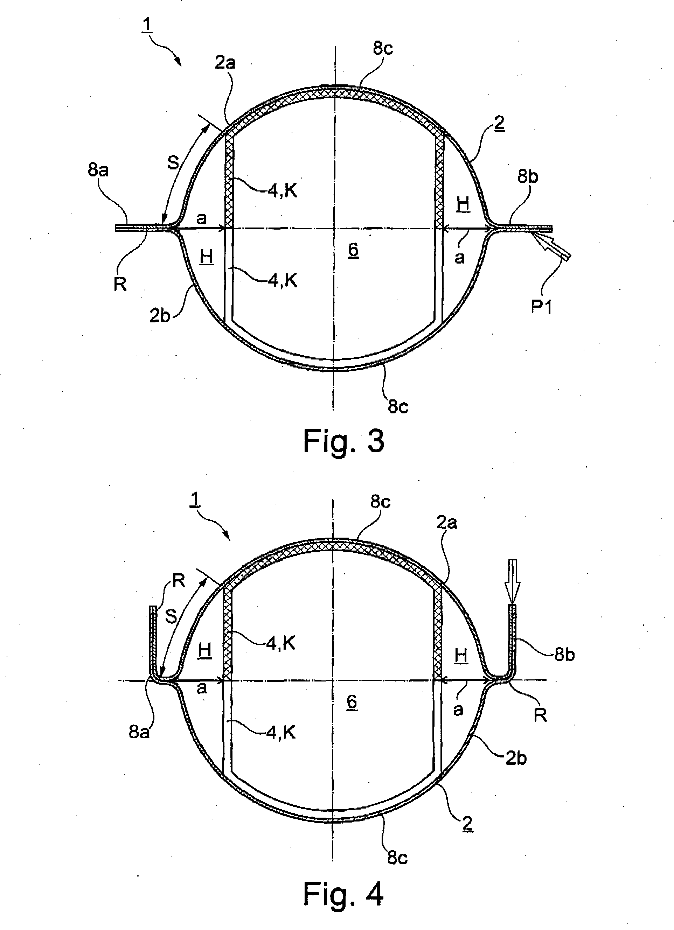

Figur 3 zeigt im Querschnitt eine alternative Ausführungsform für ein Bauteil 1 mit einem Grundkörper 2 aus den Elementen 2a und 2b. Der Grundkörper 2 ist als Hohlzylinder ausgebildet, der aus zwei halbschaligen Elementen 2a, 2b gebildet ist. Die beiden halbschaligen Elemente 2a und 2b bilden einen kreisförmigen Querschnitt und weisen Auskragungen auf, die die Ränder R für die Verbindungsstellen 8a und 8b bilden. Pfeil P1 zeigt hier die für eine Schweißverbindung der Verbindungsstelle 8b erforderliche Schweißorientierung an. Für einen hinreichend großen Mindestabstand a bzw. eine Wärmeleitstrecke S zwischen der jeweiligen Verbindungsstelle 8a, 8b zu der Kunststoffstruktur K weist diese anstelle eines runden Querschnitts wie dem Querschnitt des Grundkörpers 2 einen weitgehend kastenförmigen Querschnitt auf, so dass ein Hohlraum H zwischen der Kunststoffstruktur K und der jeweiligen Verbindungsstelle 8a, 8b gebildet ist. Im Bereich der Verbindungsstelle 8c sind aufgrund der Art der Verbindung über angespritzten oder angefügten Kunststoff 4 die Elemente 2a, 2b darüber hinaus über den Kunststoff 4 selbst mittelbar verbunden.

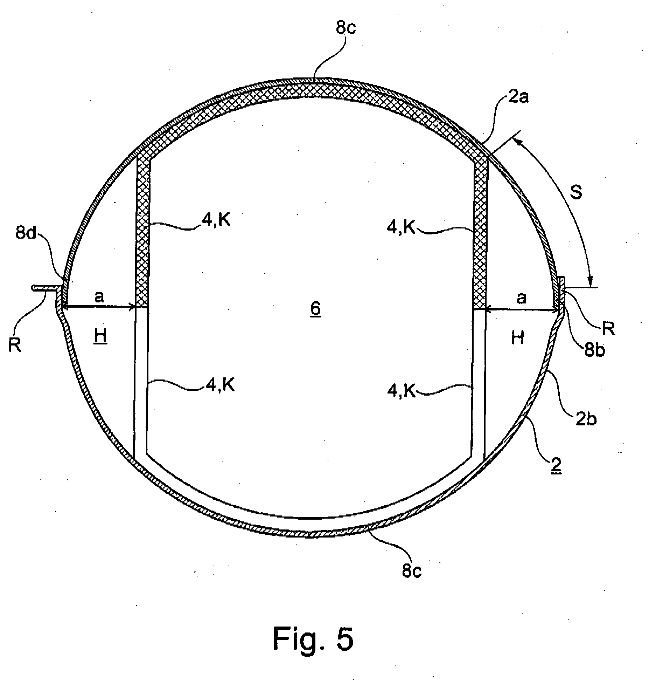

Figuren 4 und 5 zeigen im Querschnitt verschiedene Ausführungsformen für ein Bauteil 1 gemäß Figur 3 mit unterschiedlich ausgeführten Verbindungsstellen 8a und 8b zum Schweißen (Figur 4) und zum Löten (Figur 5). Auch hier ist ein entsprechend großer Hohlraum H zwischen der jeweiligen Verbindungsstelle 8a, 8b zur Kunststoffstruktur K mit einem hinreichend großen Mindestabstand a bzw. mit einer hinreichend großen Wärmeleitstrecke S gebildet.

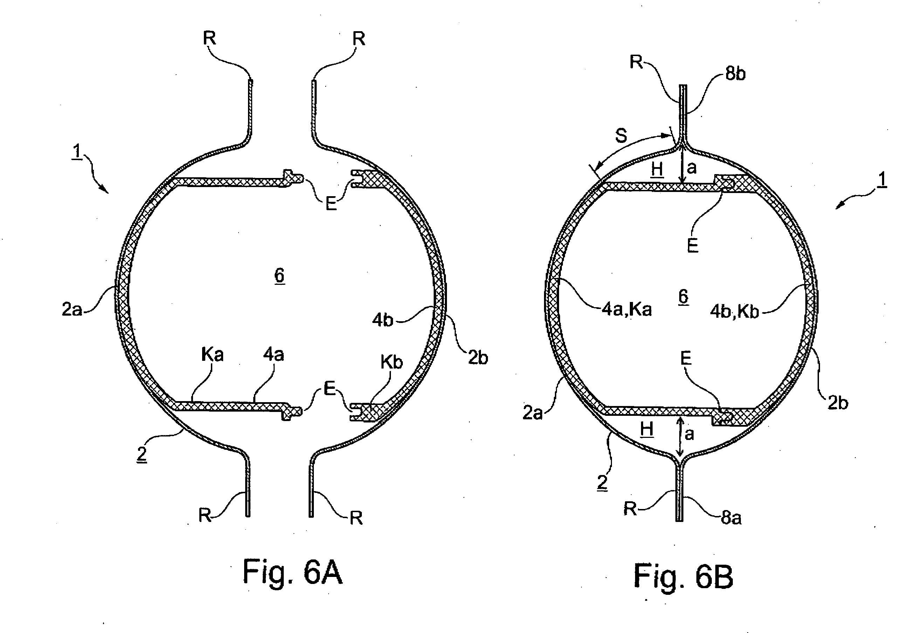

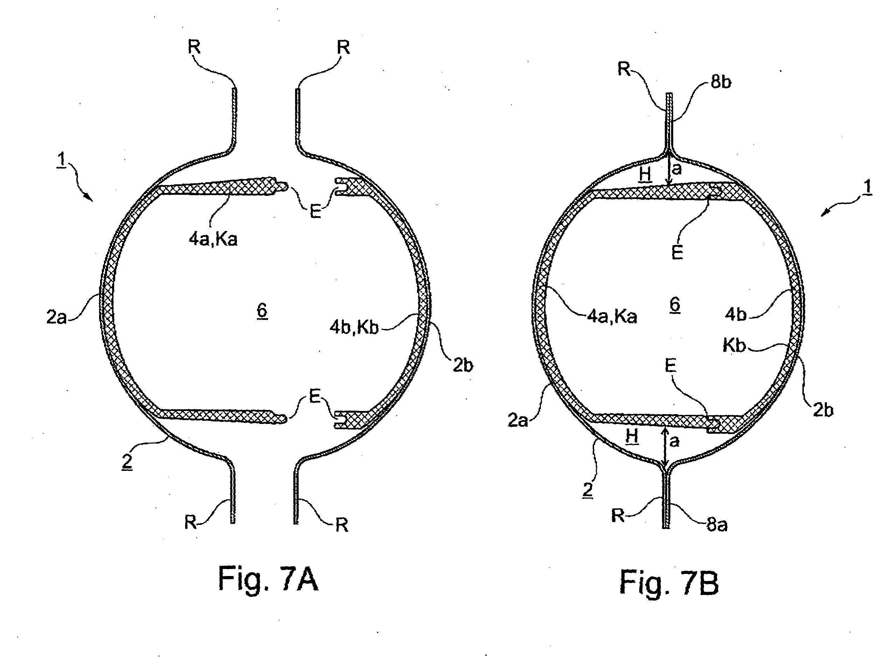

Figuren 6A und 6B bzw. 7A und 7B zeigen verschiedene Ausführungsformen für ein Bauteil 1 mit einem aus zwei halbschaligen Elementen 2a und 2b gebildeten Grundkörper 2 mit kreisförmigem Querschnitt. Dabei werden die jeweiligen halbschaligen Elemente 2a und 2b mit der eingespritzten oder ein/angefügten Kunststoffstruktur K vorgefertigt (Figur 6A bzw. 7A) und anschließend gefügt und an den Verbindungsstellen 8a, 8b miteinander verbunden (Figur 6B bzw. 7B). Die Kunststoffstruktur K ist hierbei zweiteilig ausgebildet und weist zur Verbindung entsprechend ausgeformte und korrespondierende Enden E, welche beim Verbinden der Elemente 2a und 2b ineinander gefügt werden, auf. D. h. das jeweilige Element 2a oder 2b bildet mit der zugehörigen halbförmigen Kunststoffstruktur Ka bzw. Kb ein einzelnes vorfertigbares Teil. Die vorgefertigten Elemente 2a und 2b werden anschließend zum Bauteil 1 zusammengebaut.

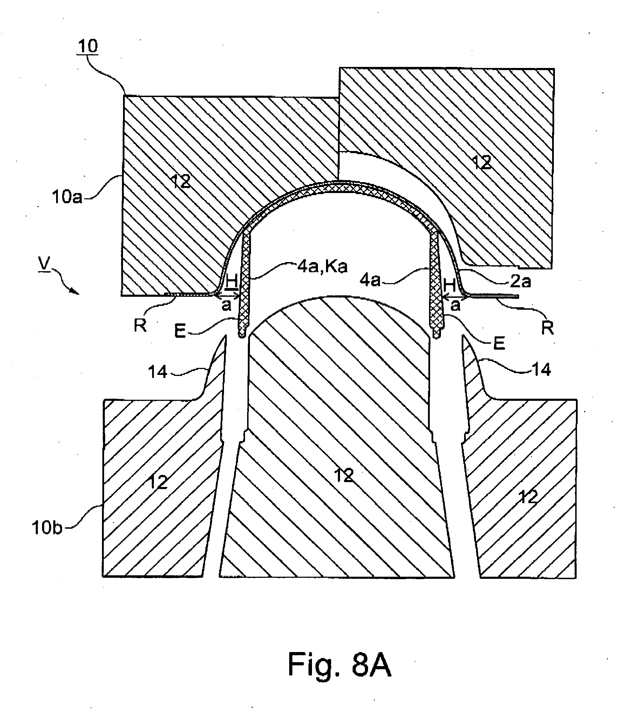

Figuren 8A bis 8C zeigen die Schritte zum Herstellen eines der in den oben beschriebenen Figuren 1 bis 7B dargestellten Bauteils 1. Dabei wird als Träger für das Bauteil 1 der metallische Grundkörper 2 verwendet. Je nach Form des Bauteils 1 kann der Grundkörper 2 bereits vorgeformt sein. Alternativ wird der Grundkörper 2 in einer in Figur 8A gezeigten Vorrichtung V, insbesondere in einem Formgebungs- und/oder Fügewerkzeug 10 vorgeformt. Alternativ kann in nicht näher dargestellter Weise das Formgebungs- und Fügewerkzeug 10 auch mit offener Form ausgebildet sein, wobei entweder die Halbschalen oder Elemente 2a, 2b des Grundkörpers 2 mit Kunststoff 4 ausgekleidet oder nachträglich gefügt werden oder eine Kunststoffstruktur K nachträglich zwischen den Elementen 2a, 2b eingefügt wird.

Je nach Art und Aufbau kann das Formgebungs- und Fügewerkzeug 10 ein- oder mehrteilig ausgebildet sein. Vorliegend ist das Formgebungs- und Fügewerkzeug 10 zweiteilig ausgeführt und umfasst ein Oberwerkzeug 10a und ein Unterwerkzeug 10b. Beispielhaft, wie in Figur 8A gezeigt, können das Oberwerkzeug 10a und das Unterwerkzeug 10b wiederum mehrteilig ausgebildet sein. Dabei weist das Oberwerkzeug 10a zwei nebeneinander angeordnete Formgebungselemente 12, z. B. zwei offene Halbzylinder, auf. Das Unterwerkzeug 10b umfasst zwei ineinander angeordnete Formgebungselemente 12, z. B. einen Vollkern und ein den Vollkern umgebendes weiteres Formgebungselement. Die Formgebungselemente 12 dienen einer weiteren Formgebung des Grundkörpers 2. Darüber hinaus kann eines der Formgebungselemente 12 dem Niederhalten des Grundkörpers 2 während des Umformprozesses dienen. Durch Einführen der einzelnen Formgebungselemente 12 des Oberwerkzeugs 10a wird der im Formgebungs- und Fügewerkzeug 10 eingelegte Grundkörper 2 partiell vorgeformt, wie in der Figur 8A gezeigt. Ansonsten dienen die Formgebungselemente 12 zur Bildung von Kavitäten, Hohlräumen H, in welche eine Kunststoffmasse eingebracht wird.

Gemäß Figur 8A wird die Herstellung eines der Elemente 2a des Grundkörpers 2 näher erläutert. Die Herstellung des anderen Elements 2b kann im selben Formgebungs- und Fügewerkzeug 10 ausgeführt werden, wobei zur Formung der unterschiedlichen Enden E der halbförmigen Kunststoffstruktur Ka, Kb das als Vollkern oder Stempel ausgebildete Formgebungselement 12 ausgetauscht und ein anderer Stempel mit einer entsprechend ausgebildeten Außenform eingesetzt wird. Im Fall, dass die Halbschalen nachträglich gefügt werden, wird der Grundkörper 2, insbesondere eines der Elemente 2a, zur Herstellung eines Bauteils 1 gemäß Figur 8A in ein Formgebungselement 12 des Oberwerkzeugs 10a des Formgebungs- und Fügewerkzeugs 10 eingelegt. Durch zumindest teilweise oder vollständiges Schließen eines der Formgebungselemente 12 wird der Grundkörper 2 entsprechend der Form oder Kontur der durch die Formgebungselemente 12 vorgegebenen Form vorgeformt. Beim Formgeben des Elements 2a mit der Kunststoffstruktur Ka, wie in Figur 8A gezeigt, wird zwischen dem Grundkörper 2 und der Wandung der Kunststoffstruktur Ka ein Hohlraum H durch eine entsprechende Ausformung 14 des unteren Formgebungselements 12 des Unterwerkzeugs 10b im Bereich der Ränder R gebildet. Im Bereich der Schalenform des Elements 2a wird der Kunststoff 4 eingespritzt, eingefügt oder angefügt, so dass der Grundkörper 2 zumindest partiell mit der Kunststoffschicht 4 ausgekleidet wird, insbesondere umspritzt oder umschäumt wird.

Die Größe des Hohlraums H wird in Abhängigkeit von der Form des betreffenden Formgebungselements 12 mit der angesetzten Ausformung vorgegeben. Vorzugsweise weist der Hohlraum H einen Mindestabstand a zwischen der äußeren Wandung der Kunststoffstruktur Ka und dem betreffenden Rand R des Elements 2a auf. Der Mindestabstand a, insbesondere für eine hinreichend große Wärmeleitstrecke S, beträgt mindestens 0,8 mm und höchstens 25 mm, beispielsweise 0,8 mm bis 5 mm, 5 mm bis 10 mm, 10 mm bis 15 mm, 15 mm bis 20 mm oder 20 mm bis 25 mm.

Je nach Ausgestaltung des Formgebungs- und/oder Fügewerkzeugs 10 und der Vorformung des Grundkörpers 2 kann dieser innen- und/oder außenseitig mit einer Kunststoffschicht 4 versehen werden. Darüber hinaus kann durch Einbringen von Kunststoff in mehreren Phasen dieser ein- oder mehrschichtig an den Grundkörper 2 angeformt werden.

In einer Nachdruckphase wird anschließend der Grundkörper 2 beispielsweise durch Einführen und/oder Durchdrücken der Formgebungselemente 12 des Ober- und/oder Unterwerkzeugs 10a bzw. 10b für eine möglichst konturgenaue Ausbildung der Formen des Grundkörpers 2 mit der Kunststoffschicht 4 in eine vorgegebene Endausbildung druckgeformt. Hierdurch wird die Kunststoffschicht 4 nachhaltig besonders formschlüssig und flächig an den Grundkörper 2 angeformt.

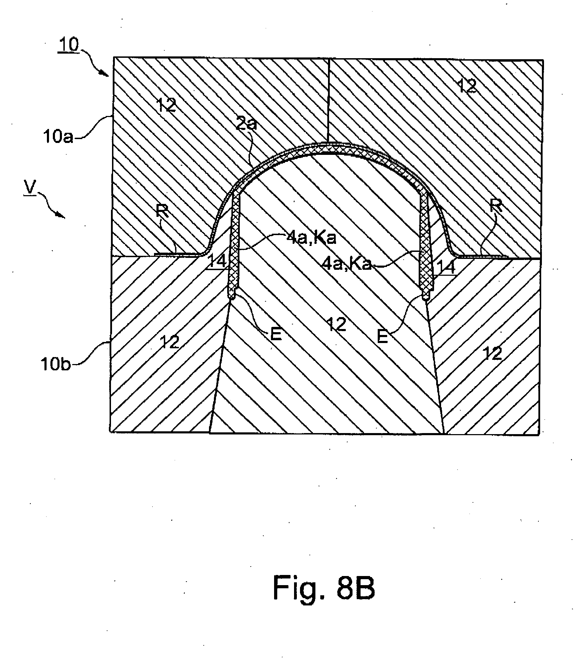

Figur 8B zeigt das Formgebungs- und Fügewerkzeug 10 in vollständig geschlossenem Zustand.

Für ein möglichst leichtes Bauteil 1, welches zudem besonders einfach formbar ist, ist der metallische Grundkörper 2 bevorzugt aus einem aus Leichtmetall, insbesondere Aluminium, Magnesium oder Feinstahl, gebildeten Grundkörper 2 mit einer Wanddicke von 0,4 mm bis 2,0 mm gebildet. Bevorzugt wird der Grundkörper 2 mit bereichsweise variierender Wanddicke geformt, so dass an das Bauteil 1 abschnittsweise weitere Elemente, z. B. eine Lenkung, eine Klimaanlage, Luftein- und/oder Luftauslässe, integriert werden können.

Je nach Art der Kunststoffauskleidung des Grundkörpers 2 mit angespritztem oder angefügtem Kunststoff 4 wird beispielsweise bei einer angespritzten Kunststoffstruktur K in einem anschließenden Verfahrensschritt Kunststoffschmelze in das Formgebungs- und Fügewerkzeug 10 eingeführt, so dass mittels des Einspritzdrucks der Grundkörper 2 mit dem Kunststoff 4 mit einer vorgegebenen Ausbildung entsprechend der Kontur der Formgebungselemente 12 zusätzlich druckgeformt wird.

Der Kunststoff 4 wird dazu über mindestens einen nicht näher dargestellten Kanal mit einem vorgegebenen Einspritzdruck in das Formgebungs- und Fügewerkzeug 10 zur ein- oder beidseitigen und vollständigen oder partiellen Beschichtung des Grundkörpers 2, beispielsweise in einem Spritzgussverfahren, insbesondere in einem Ein- oder Mehrkomponenten-Spritzgussverfahren bei beidseitig bzw. vollständig beschichtetem Bauteil 1, eingebracht. Alternativ und abhängig von der Art des Kunststoffs 4 kann dieser auch eingeschäumt, eingegossen oder in ähnlicher Weise eingebracht sein.

Die Kunststoffschicht oder der Kunststoff 4 weist unabhängig von der Art und Weise der Auskleidung - in eingespritzter oder angefügter Form - je nach Vorgabe eine Dicke d von 0,8 mm bis 10 mm auf, vorzugsweise zwischen 0,8 mm und 6 mm.

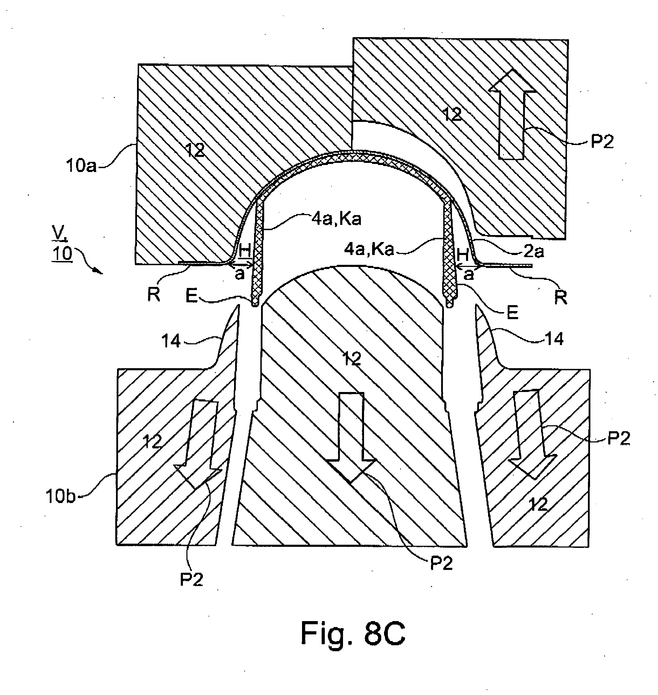

Figur 8C zeigt das Öffnen des Formgebungs- und Fügewerkzeugs 10 nach Fertigstellung des einen Elements 2a mit zugehöriger Kunststoffstruktur Ka. Dabei werden die einzelnen Formgebungselemente 12 nacheinander gemäß der Pfeile P2 in Entformungsrichtung bewegt und das Element 2a mit der angefügten Kunststoffstruktur Ka freigegeben.

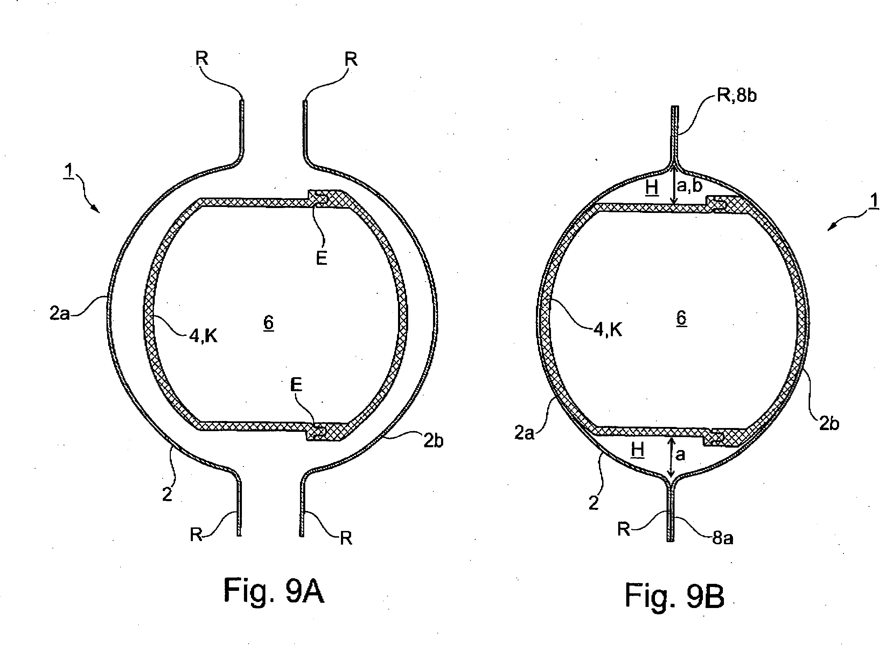

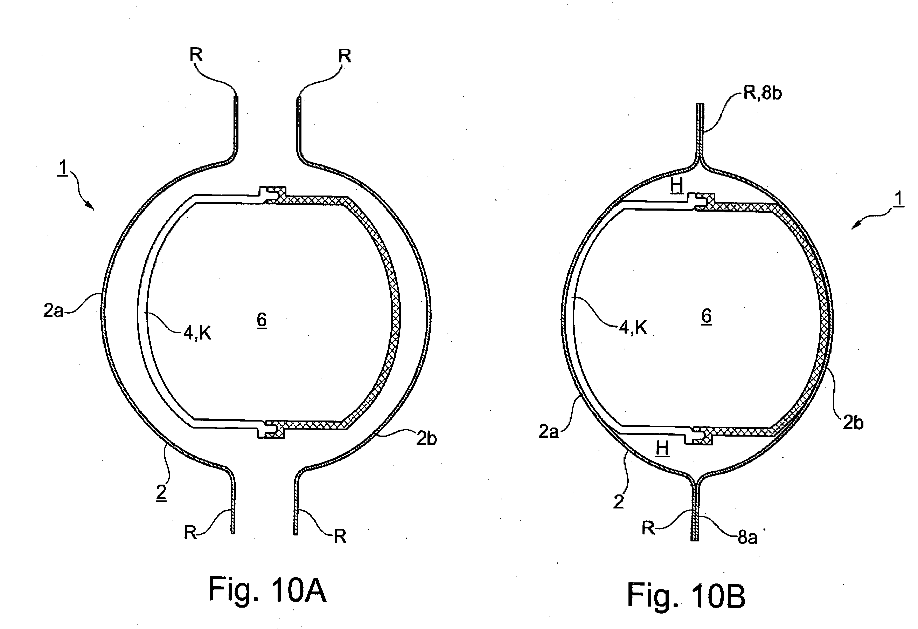

Figuren 9A und 9B bzw. 10A und 10B zeigen alternative Ausführungsformen für ein fertig gestelltes Bauteil 1, welches in so genannter PMA-Technik (= post-mold-assembly) hergestellt worden ist. Dabei wird die betreffende Kunststoffstruktur K als ein Modul vorgefertigt und nachträglich als Kunststoffauskleidung in den Grundkörper 2 eingefügt, insbesondere angefügt, so dass im Bereich der Verbindungsstellen 8a und 8b entsprechende Hohlräume H mit einem Mindestabstand a zur Kunststoffstruktur K gebildet sind.

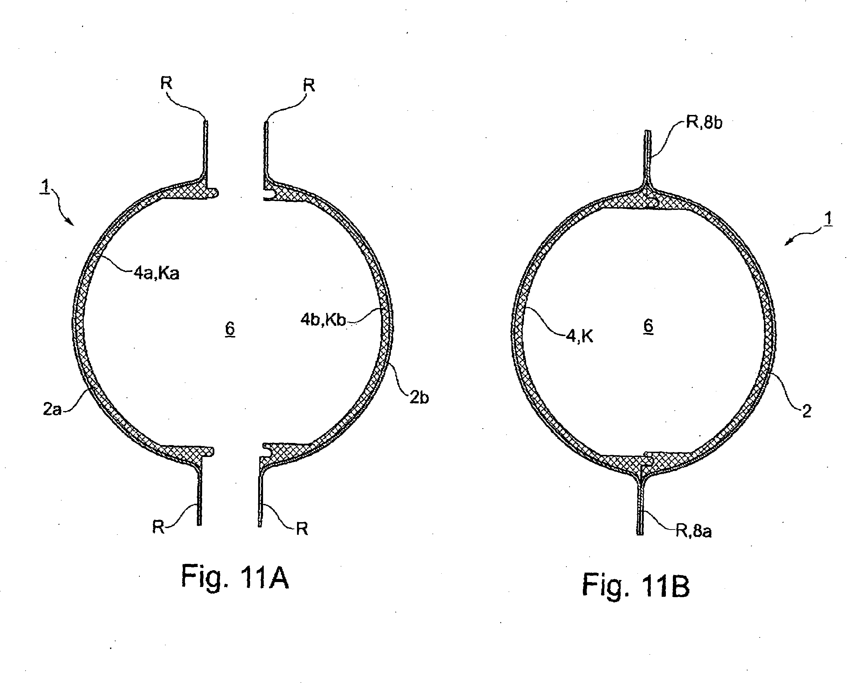

Figuren 11A und 11B zeigen eine alternative Ausführungsform für ein Bauteil 1, bei welchem der Grundkörper 2 mit dem Kunststoff 4 innenseitig beschichtet ist. Je nach Verwendung des Bauteils 1, z. B. lediglich als Kabelkanal, bei welchem die Dichtheit des Kanals 6 von untergeordneter Bedeutung ist, kann der Hohlraum H und der Mindestabstand a derart klein gewählt werden, dass der Mindestabstand a nahe Null geht. Dabei wird der Kunststoff 4 an den Grundkörper 2 angespritzt, wie oben bereits näher erläutert, so dass das jeweilige Element 2a, 2b als vorgefertigte Module gefügt und miteinander verbunden werden.

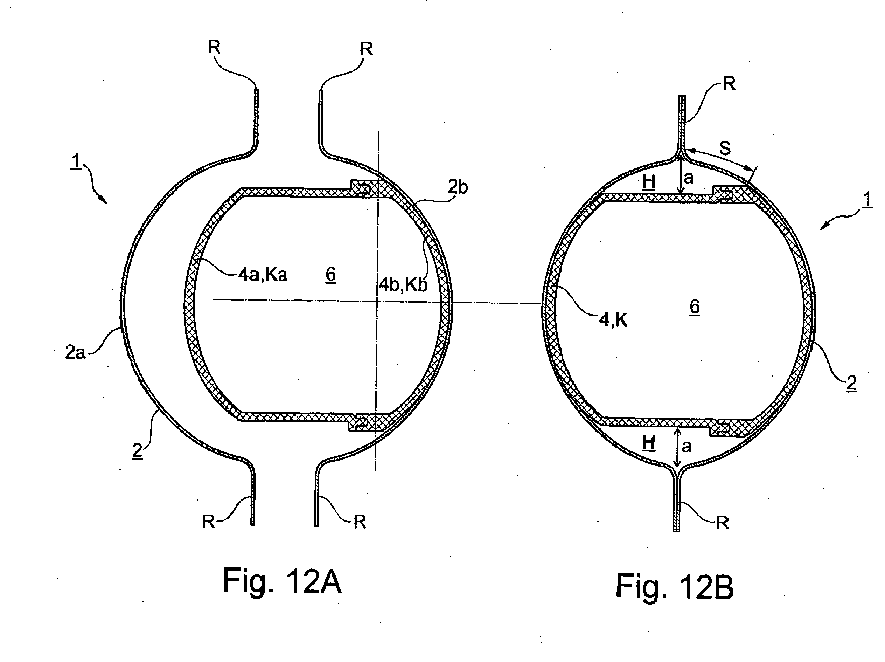

Figuren 12A und 12B zeigen eine weitere Ausführungsform für ein Bauteil 1, bei welchem eines der Elemente 2b als ein vorgefertigtes Modul mit Kunststoff 4 bereits versehen ist. Das andere Element 2a ist separat gefertigt worden; ebenso die zugehörige Kunststoffstruktur 4a. Anschließend werden sämtliche Komponenten - Element 2a, Kunststoffstruktur 4a und vorgefertigtes Modul aus dem Element 2b mit Kunststoff 4 - zu einem Bauteil 1, wie oben beschrieben, unter Bildung eines Hohlraums H mit einem Mindestabstand a zwischen Kunststoff 4 und Verbindungsstelle 8a oder 8b zusammengefügt.

Je nach Ausbildung und Form des Formgebungs- und Fügewerkzeugs 10 kann der mit Kunststoff 4 ausgekleidete Grundkörper 2 mit anderen Kunststoffstrukturen K als, den hier dargestellten Formen versehen sein. Beispielsweise kann die Kunststoffstruktur K als Strömungsstruktur oder Leit- und Führungselement mit entsprechenden Umleitungsformen versehen sein, auch kann die Kunststoffstruktur K als eine Innenverrippung oder als ein Mehrkammerkanal ausgeführt sein. Ein mit einer derartigen Kunststoffstruktur K versehener Grundkörper 2 ermöglicht eine besonders gute Formsteifigkeit und Formstruktur, so dass bei einem dünnwandigen Grundkörper 2 diesem durch eine entsprechend geformte Kunststoffstruktur K eine hinreichend gute Form- und Beulsteifigkeit und Festigkeit gegeben ist.

Zusätzlich kann das Oberwerkzeug 10 verschiedene Formen von Sicken aufweisen, wodurch eine Oberflächenstruktur des Grundkörpers 2 formbar ist. Durch Einspritzen der Kunststoffschmelze wird der Grundkörper 2 in die Sicken gedrückt und durch Spritzdruck geformt sowie mit der Kunststoffschicht 4 versehen. Je nach Form, Art und Anzahl der Sicken im Ober- und/oder Unterwerkzeug 10a bzw. 10b können beliebige Formen und Muster, z. B. Längsrillen, Querrillen, Kreuzmuster oder hexagonale Muster, als Oberflächenstruktur für den mit der Kunststoffschicht 4 versehenen Grundkörper 2 realisiert werden.

Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist. Der Grundkörper 2 ist mit mehreren in Längsrichtung gesehen in Abstand zueinander angeordneten Öffnungsbereichen zum Ein- und/oder Austritt eines im Kanal 6 geführten Mediums, z. B. Luft, versehen.

Im Weiteren kann ein solches Bauteil 1 auch an anderen Stellen in einem Fahrzeug eingesetzt werden. Beispiele sind A-, B-, C-, D-Säulen, Längsträger, Fahrzeugschweller, Dachholme, etc. Auch durch diese Bauteile 1 kann Luft einer Klimaanlage (kurz HVAC genannt) Platz sparend geführt und verteilt werden, wobei das Bauteil 1 als Strukturteil im Fahrzeug, insbesondere als Hohlstrukturteil, ausgeführt ist.

### Bezugszeichenliste

- 1: Bauteil
- 2: Grundkörper
- 2a, 2b: Elemente des Grundkörpers
- 4: Kunststoff
- 4a: Kunststoffauskleidung des Elements 2a
- 4b: Kunststoffauskleidung des Elements 2b
- 6: Kanal
- 8a bis 8d: Verbindungsstellen
- 9: Öffnung
- 10: Formgebungs- und/oder Fügewerkzeug
- 10a: Oberwerkzeug
- 10b: Unterwerkzeug
- 12: Formgebungselemente
- 14: Stempel

- a: Mindestabstand
- S: Wärmeleitstrecke
- H: Hohlraum
- K: Kunststoffstruktur
- Ka: Kunststoffstruktur des Elements 2a
- Kb: Kunststoffstruktur des Elements 2b
- R: Rand
- V: Vorrichtung

## Patentansprüche

1. Verfahren zur Herstellung eines einen zumindest teilweise kunststoffausgekleideten Grundkörper (2) umfassenden Bauteils (1), insbesondere eines Hybridbauteils für einen Querträger eines Fahrzeugs oder eines Front-End-Bauteils, bei dem der Grundkörper (2) aus mindestens zwei Elementen (2a, 2b) gebildet ist, welche an mindestens einer Verbindungsstelle (8a, 8b, 8c, 8d) miteinander verbindbar sind, wobei der Grundkörper (2) derart mit Kunststoff (4) innenwandig ausgekleidet wird, dass im Bereich einer der Verbindungsstellen (8a, 8b) zwischen der Verbindungsstelle (8a, 8b) und dem Kunststoff (4) ein Hohlraum (H) gebildet ist, **dadurch gekennzeichnet, dass** der Hohlraum (H) einen Mindestabstand (a), insbesondere mit einer hinreichend großen Wärmeleitstrecke (S), zwischen der Verbindungsstelle (8a, 8b) und dem Kunststoff (4) von mindestens 0,8 mm bildet.

2. Verfahren nach Anspruch 1, bei dem die Größe des Hohlraums (H) in Abhängigkeit von der Art der Verbindungsstelle (8a, 8b) und/oder der Kunststoffdicke vorgegeben werden bzw. wird.

3. Verfahren nach einem der Ansprüche 1 bis 2 bei dem die Elemente (2a, 2b) mechanisch und/oder stoffschlüssig, insbesondere durch Schweiβen, Kleben, Löten, Clinchen, Bördeln, Verstemmen oder über den angeformten, insbesondere angespritzten Kunststoff (4), miteinander verbunden werden.

4. Verfahren nach einem der Ansprüche 1 bis 3, bei dem der Grundkörper (2) zumindest partiell vom Kunststoff (4) beschichtet, insbesondere umspritzt oder umschäumt wird.

5. Verfahren nach Anspruch 4, bei dem der Grundkörper (2) mittels Einspritzdrucks mit einer vorgegebenen Ausbildung druckgeformt wird.

6. Verfahren nach Anspruch 4 oder 5, bei dem der Grundkörper (2) in ein Formgebungs- und Fügewerkzeug (10) eingelegt und zumindest teilweise oder vollständig durch Schließen des Formgebungs- und Fügewerkzeugs (10) vorgeformt wird.

7. Verfahren nach einem der Ansprüche 4 bis 6, bei dem der Grundkörper (2) in dem Formgebungs- und Fügewerkzeug (10) durch Einführen mindestens eines Form gebenden Formgebungselements (12, 14), z. B. eines Stempels, vorgeformt wird.

8. Verfahren nach einem der Anspruch 4 bis 7, bei dem der Grundkörper (2) durch Eindrücken und/oder Durchdrücken des Formgebungselements (12) in eine vorgegebene Endausbildung druckgeformt wird.

9. Verfahren nach einem der Ansprüche 1 bis 8, bei dem der Kunststoff (4) separat vorgeformt und nachträglich in den Grundkörper (2) eingefügt wird.

10. Verfahren nach einem der Ansprüche 1 bis 9, bei dem der Grundkörper (2) innen- und/oder außenseitig zumindest teilweise mit Kunststoff (4) versehen wird.

11. Verfahren nach einem der Ansprüche 1 bis 10, bei dem der Kunststoff (4) ein- oder mehrschichtig und/oder mit bereichsweise variierender Dicke (d) aufgebracht wird.

12. Verfahren nach einem der Ansprüche 1 bis 11, bei dem der Grundkörper (2) mit einem Kunststoffstruktur (K), insbesondere mit einer Kunststoffversteifungsstruktur, insbesondere einer Innenverrippung oder mit einer Kunststoffführungsstruktur, insbesondere einem Strömungselement, versehen wird.

13. Verfahren nach einem der Ansprüche 1 bis 12, bei dem der Kunststoff (4) in einem Ein- oder Mehrkomponenten-Spritzgussverfähren eingebracht wird.

14. Verfahren nach einem der Ansprüche 1 bis 13, bei dem der Kunststoff (4) mit einer Dicke (d) von 0,8 mm bis 10 mm aufgebracht wird.

15. Verfahren nach einem der Ansprüche 1 bis 14, bei dem ein aus einem Metall, Leichtmetall oder dessen Legierungen, insbesondere Aluminium, Magnesium, Titan oder Feinstahl, gebildeter Grundkörper (2) mit einer Wanddicke von 0,4 mm bis 2,0 mm verwendet wird.

16. Verfahren nach einem der Ansprüche 1 bis 15, bei dem der Grundkörper (2) bereichsweise mit einem physikalisch oder chemisch geschäumtem Material, insbesondere variierender Wanddicke, ausgekleidet wird.

17. Verfahren nach einem der Ansprüche 1 bis 16, bei dem der Grundkörper (2) mit bereichsweise variierender Wanddicke geformt wird.

18. Bauteil, insbesondere Hybridbauteil für einen Querträger eines Fahrzeugs, umfassend einen zumindest teilweise kunststoffausgekleideten Grundkörper (2), der aus mindestens zwei Elementen (2a, 2b) gebildet ist, welche an mindestens einer Verbindungsstelle (8a, 8b, 8c, 8d) miteinander verbindbar sind, wobei der Grundkörper (2) derart mit Kunststoff (4) innenwandig versehen ist, dass im Bereich einer der Verbindungsstellen (8a, 8b) zwischen der Verbindungsstelle (8a, 8b) und dem Kunststoff (4) ein Hohlraum (H) gebildet ist **dadurch gekennzeichnet, dass**
der Hohlraum (H) einen Mindestabstand (a), insbesondere mit einer hinreichend großen Wärmeleitstrecke (S), zwischen der Verbindungsstelle (8a, 8b) und dem Kunststoff (4) von mindestens 0,8 mm bildet.

19. Bauteil nach Anspruch 18, bei dem die Größe des Hohlraums (H) in Abhängigkeit von der Art der Verbindungsstelle (8a, 8b) und/oder der Dicke (d) des Kunststoffs (4) bestimmt ist.

20. Bauteil nach einem der Ansprüche 18 bis 19, bei dem die Elemente (2a, 2b) mit Rändern (R) versehen sind, die im geschlossenen Zustand des Grundkörpers (2) formschlüssig aneinander liegen und zur Aufnahme mindestens einer der Verbindungsstellen (8a, 8b) dienen.

21. Bauteil nach einem der Ansprüche 18 bis 20, bei dem die Elemente (2a, 2b) mechanisch und/oder stoffschlüssig, insbesondere durch Schweiβen, Kleben, Löten, Clinchen, Bördeln, Verstemmen oder über den angeformten, insbesondere angespritzten Kunststoff (4), miteinander verbunden sind.

22. Bauteil nach einem der Ansprüche 18 bis 21, bei dem der Grundkörper (2) zumindest partiell vom Kunststoff (4) beschichtet, insbesondere umspritzt oder umschäumt ist.

23. Bauteil nach einem der Ansprüche 18 bis 22, bei dem der Kunststoff (4) als eine Kunststoffstruktur (K) ausgebildet ist.

24. Bauteil nach Anspruch 23, bei dem die Kunststoffstruktur (K) zumindest teilweise oder vollständig als ein separates Modul ausgebildet ist und in den Grundkörper (2) einfügbar ist.

25. Bauteil nach Anspruch 23 oder 24 bei dem die Kunststoffstruktur (K) als eine Kunststoffversteifungsstruktur, insbesondere als eine Innenverrippung, und/oder als eine Kunststoffführungsstruktur, insbesondere als ein Strömungselement, ausgebildet ist.

26. Bauteil nach einem der Ansprüche 18 bis 25, bei dem der Kunststoff (4) eine Dicke (d) von 0,8 mm bis 10 mm aufweist.

27. Bauteil nach einem der Ansprüche 18 bis 26, bei dem der Kunststoff (4) bereichsweise eine variierende Dicke aufweist.

28. Bauteil nach einem der Ansprüche 18 bis 27, bei dem der Grundkörper (2) aus einem Metall, Leichtmetall oder dessen Legierungen, insbesondere Aluminium, Magnesium, Titan oder Feinstahl, gebildet ist und eine Wanddicke von 0,4 mm bis 2,0 mm aufweist.

29. Bauteil nach einem der Ansprüche 18 bis 28, bei dem der Grundkörper (2) eine bereichsweise variierende Wanddicke aufweist.

30. Bauteil nach einem der Ansprüche 18 bis 29, bei dem der Grundkörper (2) bereichsweise mit einem physikalisch oder chemisch geschäumten Material variierender Wanddicke ausgekleidet wird.

31. Verwendung eines nach dem Verfahren nach einem der Ansprüche 1 bis 17 hergestellten Bauteils (1) als Instrumententafelträger in einem Fahrzeug mit einem Kanal (6), insbesondere mit wenigstens einem Luftführungskanal und/oder einem Kabelkanal.

32. Verwendung eines nach dem Verfahren nach einem der Ansprüche 1 bis 17 hergestellten Bauteils (1) als Querträger in einem Fahrzeug, insbesondere als Querträger zwischen den A-Säulen eines Fahrzeugs oder als ein Front-End-Bauteil.

33. Verwendung eines nach dem Verfahren nach einem der Ansprüche 1 bis 17 hergestellten Bauteils (1) als Strukturteil in einem Fahrzeug, insbesondere als Hohlstrukturteil, als Längsträger, Schweller, Mitteltunnelstruktur, Vorbau-Längs- oder -Querträger, Vertikalstruktur, A-, B-, C-, D-Säule oder Dachstrukturteil.

34. Verwendung eines nach dem Verfahren nach einem der Ansprüche 1 bis 17 hergestellten Bauteils (1) als Strukturteil in einem Fahrzeug, insbesondere als Hohlstrukturteil, durch welches Luft eines Heizungs-, Kühlungs-, Klimatisierungs- oder Belüftungs-Gerätes geführt wird.

35. Verwendung eines nach dem Verfahren nach einem der Ansprüche 1 bis 17 hergestellten Bauteils (1) als unter einer Windschutzscheibe angeordneter Querträger in einem Kraftfahrzeug, wobei der Kanal (6) ein Luftführungskanal zur Führung eines der Windschutzscheibe und/oder den Seitenscheiben zu zuführenden Luftstroms und/oder zur Beheizung einer Wischblattablage.

## Claims

1. A method for manufacturing a component (1) comprising a base body (2) which is at least partially lined with plastic, said component (1) being in particular a hybrid component for a transverse beam of a vehicle or a front-end component, in which the base body (2) is made of at least two elements (2a, 2b) which can be connected to one another at at least one connection point (8a, 8b, 8c, 8d), the inner wall of the base body (2) being lined with plastic (4) in such a way that a cavity (H) is formed in the region of one of the connection points (8a, 8b) between the connection point (8a, 8b) and the plastic (4), **characterized in that** the cavity (H) has a minimum distance (a), in particular with a sufficiently large heat conduction path (S), between the connection point (8a, 8b) and the plastic (4) of at least 0.8 mm.

2. The method as claimed in claim 1, wherein the size of the cavity (H) is predefined as a function of the type of connection point (8a, 8b) and/or the thickness of the plastic.

3. A method as claimed in one of claims 1 to 2, wherein the elements (2a, 2b) are connected to one another mechanically and/or by bounding, in particular by welding, gluing, soldering, clinching, crimping, caulking or by means of the integrally molded, in particular integrally injection molded, plastic (4).

4. A method as claimed in one of claims 1 to 3, wherein the base body (2) is coated at least partially with plastic (4), in particular insert-molded or embedded in foam.

5. The method as claimed in claim 4, wherein the base body (2) is pressure molded with a predefined design by means of injection pressure.

6. The method as claimed in claim 4 or 5, wherein the base body (2) is inserted into a forming and joining tool (10) and is at least partially or completely preformed by closing the forming and joining tool (10).

7. A method as claimed in one of claims 4 to 6, wherein the base body (2) is preformed in the forming and joining tool (10) by introducing at least one forming element (12, 14), for example a die, which produces a shape.

8. A method as claimed in one of claims 4 to 7, wherein the base body (2) is pressure molded by pressing in and/or pressing through the forming element (12) into a predetermined final design.

9. A method as claimed in one of claims 1 to 8, wherein the plastic (4) is separately preformed and subsequently inserted into the base body (2).

10. A method as claimed in one of claims 1 to 9, wherein the base body (2) is at least partially provided with plastic (4) on the inside and/or outside.

11. A method as claimed in one of claims 1 to 10, wherein the plastic (4) is applied in a single layer or multiple layers and/or with a thickness (d) which varies in certain areas.

12. A method as claimed in one of claims 1 to 11, wherein the base body (2) is provided with a plastic structure (K), in particular with a plastic reinforcing structure, in particular internal ribbing or with a plastic guiding structure, in particular a flow element.

13. A method as claimed in one of claims 1 to 12, wherein the plastic (4) is introduced in a single component or multicomponent injection molding method.

14. A method as claimed in one of claims 1 to 13, wherein the plastic (4) is applied with a thickness (d) of 0.8 mm to 10 mm.

15. A method as claimed in one of claims 1 to 14, wherein a base body (2) which is made of a metal, light metal or the alloys thereof, in particular aluminum, magnesium, titanium or refined steel, having a wall thickness of 0.4 mm to 2.0 mm, is used.

16. A method as claimed in one of claims 1 to 15, wherein the base body (2) is lined in certain areas with a physically or chemically foamed material, in particular with a varying wall thickness.

17. A method as claimed in one of claims 1 to 16, wherein the base body (2) is formed with a wall thickness which varies in certain areas.

18. A component, in particular a hybrid component, for a transverse beam of a vehicle, comprising a base body (2) which is at least partially lined with plastic and which is made of at least two elements (2a, 2b) which can be connected to one another at at least one connection point (8a, 8b, 8c, 8d), the base body (2) being provided on the inner walls with plastic (4) in such a way that a cavity (H) is formed in the region of one of the connection points (8a, 8b) between the connection point (8a, 8b) and the plastic (4), **characterized in that** the cavity (H) has a minimum distance (a), in particular with a sufficiently large heat conduction path (S), between the connection point (8a, 8b) and the plastic (4) of at least 0.8 mm.

19. The component as claimed in claim 18, wherein the size of the cavity (H) is determined as a function of the type of the connection point (8a, 8b) and/or the thickness (d) of the plastic (4).

20. A component as claimed in one of claims 18 to 19, wherein the elements (2a, 2b) are provided with edges (R) which bear one against the other in a positively engaged fashion in the closed state of the base body (2) and serve to receive at least one of the connection points (8a, 8b).

21. A component as claimed in one of claims 18 to 20, wherein the elements (2a, 2b) are connected to one another mechanically and/or by bonding, in particular by welding, gluing, soldering, clinching, crimping, caulking or by means of the integrally molded, in particular integrally injection molded plastic (4).

22. A component as claimed in one of claims 18 to 21, wherein the base body (2) is coated at least partially with plastic (4), in particular insert-molded or embedded in foam.

23. A component as claimed in one of claims 18 to 22, wherein the plastic (4) is designed as a plastic structure (K).

24. The component as claimed in claim 23, wherein the plastic structure (K) is designed at least partially or completely as a separate module and can be inserted into the base body (2).

25. The component as claimed in claim 23 or 24, wherein the plastic structure (K) is designed as a plastic reinforcing structure, in particular as internal ribbing, and/or as a plastic guiding structure, in particular as a flow element.

26. A component as claimed in one of claims 18 to 25, wherein the plastic (4) has a thickness (d) of 0.8 mm to 10 mm.

27. A component as claimed in one of claims 18 to 26, wherein the plastic (4) has a varying thickness in certain areas.

28. A component as claimed in one of claims 18 to 27, wherein the base body (2) is made of a metal, light metal or the alloys thereof, in particular aluminum, magnesium, titanium or refined steel, and has a wall thickness of 0.4 mm to 2.0 mm.

29. A component as claimed in one of claims 18 to 28, wherein the base body (2) has a varying wall thickness in certain areas.

30. A component as claimed in one of claims 18 to 29, wherein the base body (2) is lined in certain areas with a physically or chemically foamed material with a varying wall thickness.

31. Use of a component (1) which is manufactured according to the method as claimed in one of claims 1 to 17, as an instrument panel beam in a vehicle with a duct (6), in particular with at least one air guiding duct and/or one cable duct.

32. Use of a component (1) which is manufactured according to the method as claimed in one of claims 1 to 17, as a transverse beam in a vehicle, in particular as a transverse beam between the A-pillars of a vehicle or as a front-end component.

33. Use of a component (1) which is manufactured according to the method as claimed in one of claims 1 to 17, as a structural part in a vehicle, in particular as a hollow structural part, as a longitudinal beam, sillboard, center tunnel structure, front-part longitudinal beam or transverse beam, vertical structure, A, B, C, D pillar or roof structural part.

34. Use of a component (1) which is manufactured according to the method as claimed in one of claims 1 to 17, as a structural part in a vehicle, in particular as a hollow structural part through which air from a heating, cooling, air conditioning or ventilation device is guided.

35. Use of a component (1) which is manufactured according to the method as claimed in one of claims 1 to 17, as a transverse beam which is arranged under a windshield in a motor vehicle, wherein the duct (6) is an air guiding duct for guiding an air stream which is to be fed to the windshield and/or the side windows, and/or for heating a wiper blade support.

## Revendications

1. Procédé de fabrication d'un composant (1) comprenant un corps de base (2) recouvert au moins partiellement de matière plastique, fabrication en particulier d'un composant hybride pour une traverse d'un véhicule ou d'un composant de la partie avant, procédé dans lequel le corps de base (2) est formé par au moins deux éléments (2a, 2b) qui peuvent être assemblés l'un à l'autre au niveau d'au moins un point d'assemblage (8a, 8b, 8c, 8d), où le corps de base (2) est recouvert, sur la paroi intérieure, de matière plastique (4), de manière telle que, dans la zone de l'un des points d'assemblage (8a, 8b), un espace creux (H) soit formé entre le point d'assemblage (8a, 8b) et la matière plastique (4), **caractérisé en ce que** l'espace creux (H), entre le point d'assemblage (8a, 8b) et la matière plastique (4), forme un intervalle minimum (a) d'au moins 0,8 mm, en particulier ayant un parcours (S) conducteur de la chaleur suffisamment important.

2. Procédé selon la revendication 1, dans lequel la taille de l'espace creux (H) est prédéfinie en fonction du type du point d'assemblage (8a, 8b) et / ou de l'épaisseur de la matière plastique.

3. Procédé selon la revendication 1 ou 2, dans lequel les éléments (2a, 2b) sont assemblés l'un à l'autre mécaniquement et / ou par continuité de matière, en particulier par soudage, collage, brasage, clinchage, sertissage, matage ou bien par la matière plastique (4) appliquée par moulage, en particulier appliquée par injection.

4. Procédé selon l'une quelconque des revendications 1 à 3, dans lequel le corps de base (2) est recouvert au moins partiellement de matière plastique (4), en particulier enrobé par injection ou enrobé de mousse.

5. Procédé selon la revendication 4, dans lequel le corps de base (2), à l'aide d'une pression d'injection, est formé sous pression en ayant une configuration prédéfinie.

6. Procédé selon la revendication 4 ou 5, dans lequel le corps de base (2) est introduit dans un outil de formage et d'assemblage (10) et préformé au moins en partie ou en totalité, par fermeture de l'outil de formage et d'assemblage (10).

7. Procédé selon l'une quelconque des revendications 4 à 6, dans lequel le corps de base (2) est préformé dans l'outil de formage et d'assemblage (10), par introduction d'au moins un élément de formage (12, 14), par exemple un poinçon, donnant une forme.

8. Procédé selon l'une quelconque des revendications 4 à 7, dans lequel le corps de base (2), par enfoncement et / ou par pression de l'élément de formage (12), est formé sous pression dans une configuration finale prédéfinie.

9. Procédé selon l'une quelconque des revendications 1 à 8, dans lequel la matière plastique (4) est préformée séparément et introduite, ensuite, dans le corps de base (2).

10. Procédé selon l'une quelconque des revendications 1 à 9, dans lequel le corps de base (2) est doté, à l'intérieur et / ou à l'extérieur, au moins partiellement de matière plastique (4).

11. Procédé selon l'une quelconque des revendications 1 à 10, dans lequel la matière plastique (4) est appliquée en une ou plusieurs couches et / ou en ayant une épaisseur (d) qui varie suivant la zone.

12. Procédé selon l'une quelconque des revendications 1 à 11, dans lequel le corps de base (2) est doté d'une structure (K) en matière plastique, en particulier d'une structure de renfort en matière plastique, en particulier d'un nervurage intérieur ou bien d'une structure de guidage en matière plastique, en particulier d'un élément d'écoulement.

13. Procédé selon l'une quelconque des revendications 1 à 12, dans lequel la matière plastique (4) est introduite en utilisant un procédé de moulage par injection à un ou plusieurs composants.

14. Procédé selon l'une quelconque des revendications 1 à 13, dans lequel la matière plastique (4) est appliquée avec une épaisseur (d) de 0,8 mm à 10 mm.

15. Procédé selon l'une quelconque des revendications 1 à 14, dans lequel on utilise un corps de base (2) ayant une épaisseur de paroi de 0,4 mm à 2,0 mm, ledit corps de base étant constitué d'un métal, d'un métal léger ou de ses alliages, en particulier d'aluminium, de magnésium, de titane ou d'acier fin.

16. Procédé selon l'une quelconque des revendications 1 à 15, dans lequel le corps de base (2) est recouvert, par zones, d'une matière physiquement ou chimiquement expansée, en particulier d'une épaisseur de paroi variable.

17. Procédé selon l'une quelconque des revendications 1 à 16, dans lequel le corps de base (2) est formé, en ayant une épaisseur de paroi qui varie suivant la zone.

18. Composant, en particulier composant hybride pour une traverse d'un véhicule, comprenant un corps de base (2) au moins partiellement recouvert de matière plastique, corps de base qui est formé par au moins deux éléments (2a, 2b) qui peuvent être assemblés l'un à l'autre, au niveau d'au moins un point d'assemblage (8a, 8b, 8c, 8d), où le corps de base (2) est doté de matière plastique (4) sur la paroi intérieure, de manière telle que, dans la zone de l'un des points d'assemblage (8a, 8b), un espace creux (H) soit formé entre le point d'assemblage (8a, 8b) et la matière plastique (4),
**caractérisé en ce que** l'espace creux (H), entre le point d'assemblage (8a, 8b) et la matière plastique (4), forme un intervalle minimum (a) d'au moins 0,8 mm, en particulier ayant un parcours (S) conducteur de la chaleur suffisamment important.

19. Composant selon la revendication 18, dans lequel la taille de l'espace creux (H) est déterminée en fonction du type du point d'assemblage (8a, 8b) et / ou de l'épaisseur (d) de la matière plastique (4).

20. Composant selon la revendication 18 ou 19, dans lequel les éléments (2a, 2b) sont dotés de bords (R) qui, lorsque le corps de base (2) est fermé, sont en appui les uns contre les autres, par complémentarité de forme, et servent au logement d'au moins l'un des points d'assemblage (8a, 8b).

21. Composant selon l'une quelconque des revendications 18 à 20, dans lequel les éléments (2a, 2b) sont assemblés l'un à l'autre mécaniquement et / ou par continuité de matière, en particulier par soudage, collage, brasage, clinchage, sertissage, matage ou bien par la matière plastique (4) appliquée par moulage, en particulier appliquée par injection.

22. Composant selon l'une quelconque des revendications 18 à 21, dans lequel le corps de base (2) est recouvert au moins partiellement de matière plastique (4), en particulier enrobé par injection ou enrobé de mousse.

23. Composant selon l'une quelconque des revendications 18 à 22, dans lequel la matière plastique (4) est configurée comme une structure (K) en matière plastique.

24. Composant selon la revendication 23, dans lequel la structure (K) en matière plastique est configurée au moins en partie ou en totalité comme un module séparé et peut être introduite dans le corps de base (2).

25. Composant selon la revendication 23 ou 24, dans lequel la structure (K) en matière plastique est configurée comme une structure de renfort en matière plastique, en particulier comme un nervurage intérieur et / ou comme une structure de guidage en matière plastique, en particulier comme un élément d'écoulement.

26. Composant selon l'une quelconque des revendications 18 à 25, dans lequel la matière plastique (4) présente une épaisseur (d) de 0,8 mm à 10 mm.

27. Composant selon l'une quelconque des revendications 18 à 26, dans lequel la matière plastique (4) présente une épaisseur qui varie suivant la zone.

28. Composant selon l'une quelconque des revendications 18 à 27, dans lequel le corps de base (2) est constitué d'un métal, d'un métal léger ou de ses alliages, en particulier d'aluminium, de magnésium, de titane ou d'acier fin, et présente une épaisseur de paroi de 0,4 mm à 2,0 mm.

29. Composant selon l'une quelconque des revendications 18 à 28, dans lequel le corps de base (2) présente une épaisseur de paroi qui varie suivant la zone.

30. Composant selon l'une quelconque des revendications 18 à 29, dans lequel le corps de base (2) est recouvert, par zones, d'une matière physiquement ou chimiquement expansée, d'une épaisseur de paroi variable.

31. Utilisation d'un composant (1) fabriqué selon le procédé conformément à l'une quelconque des revendications 1 à 17, comme support de tableau de bord dans un véhicule, comportant un conduit (6), en particulier comportant au moins un conduit de guidage d'air et / ou un conduit de câbles.

32. Utilisation d'un composant (1) fabriqué selon le procédé conformément à l'une quelconque des revendications 1 à 17, comme traverse dans un véhicule, en particulier comme traverse entre les montants A d'un véhicule, ou bien comme un composant de la partie avant.

33. Utilisation d'un composant (1) fabriqué selon le procédé conformément à l'une quelconque des revendications 1 à 17, comme pièce de structure dans un véhicule, en particulier comme pièce de structure creuse, comme longeron, seuil de porte, structure de tunnel central, longeron ou traverse de la partie avant, structure verticale, montant A, B, C, D ou bien comme pièce de structure de toit.

34. Utilisation d'un composant (1) fabriqué selon le procédé conformément à l'une quelconque des revendications 1 à 17, comme pièce de structure dans un véhicule, en particulier comme pièce de structure creuse à travers laquelle est guidé de l'air d'un appareil de chauffage, de refroidissement, de climatisation ou de ventilation.

35. Utilisation d'un composant (1) fabriqué selon le procédé conformément à l'une quelconque des revendications 1 à 17, comme traverse dans un véhicule automobile, disposée sous un pare-brise, où le conduit (6) est un conduit de guidage d'air servant au guidage d'un flux d'air à fournir au pare-brise et / ou aux vitres latérales, et / ou servant au chauffage d'un logement des balais d'essuie-glaces.
